# EUROPÄISCHE PATENTANMELDUNG

(11) **EP 2 565 511 A1**
(43) Veröffentlichungstag der Anmeldung: **06.03.2013**
(21) Anmeldenummer: 12181881.9
(22) Anmeldetag: 27.08.2012
(51) Int. Cl.: F16L 55/11, F16L 57/00

(54) **Verschlussstopfen**

(30) Priorität: 05.09.2011 DE 102011112702
(71) Anmelder: VERITAS AG, 63571 Gelnhausen (DE)
(72) Erfinder: Zahn, Roland, 36396 Steinau a. d. Str. (DE)
(74) Vertreter: Grünecker, Kinkeldey, Stockmair & Schwanhäusser

(57) **Zusammenfassung**

Die Erfindung bezieht sich auf einen Verschlussstopfen, aufweisend: ein vorzugsweise zylindrisches Außenteil (2), welches ein zu verschließendes Objekt zumindest abschnittsweise umfänglich umgibt, und ein Innenteil (3) welches zumindest eine elastische Rippe (4) aufweist, wobei das Innenteil (3) in das zu verschließendes Objekt einsetzbar ist und dieses von innen kontaktiert.

## Beschreibung

Die vorliegende Erfindung bezieht sich auf einen Verschlussstopfen, vorzugsweise zum Verschließen von Getriebeölleitungen oder Getriebeölkühlerleitungen.

Solch ein Verschlussstopfen ist für Anwendungen gedacht, bei denen sowohl ein Innenbereich einer Leitung als auch ein Außenbereich, wie z.B. eine Dichtfläche oder ein O-Ringanschluss gegen Schmutzeintrag und Beschädigungen geschützt werden sollen. Insbesondere soll auch der Außenbereich eines Leitungsendes von dem Verschlussstopfen abgedeckt werden.

Bisher ist ein Verschlussstopfen aus der US 2,321,667 bekannt, welcher einen geschlossenen Innenkegel aufweist sowie ein hutförmiges Außenteil. Solch ein herkömmlicher Verschlussstopfen ist jedoch nicht in der Lage, verschiedene Innendurchmesser einer Leitung abzufangen und gleichzeitig auf einer bestimmten Länge den Außenbereich eines Leitungsendes zu schützen. Zwar kann dieser Verschlussstopfen in unterschiedliche Innendurchmesser eingesetzt werden, jedoch bewirkt der geschlossene Innenkegel eine Veränderung der Einstecktiefe. Ab einer bestimmten Einstecktiefe fängt der Innenkegel an zu klemmen und kann nicht weiter in die Leitung hineingeschoben werden. Dementsprechend ist die Überdeckung des Außenbereichs je nach Leitungsdicke unterschiedlich. Aufgrund dessen kann z.B. ein außenliegender O-Ringanschluss oftmals nur unzureichend durch das Außenteil abgedeckt werden.

Es ist dementsprechend eine Aufgabe der vorliegenden Erfindung, den oben beschriebenen Nachteil zu vermeiden und einen Verschlussstopfen anzugeben, welcher stets eine ausreichende Einstecktiefe gewährleistet.

Diese Aufgabe wird mit dem Gegenstand des vorliegenden Patentanspruchs 1 gelöst.

Dadurch dass der Verschlussstopfen ein vorzugsweise zylindrisches Außenteil aufweist, welches ein zu verschließendes Objekt zumindest abschnittsweise umfänglich umgibt und ein Innenteil, welches zumindest eine elastische Rippe aufweist, wobei das Innenteil in das zu verschließende Objekt einsetzbar ist und dieses von Innen kontaktiert, kann sichergestellt werden, dass der Verschlussstopfen jeweils ausreichend tief in ein Leitungsende einsteckbar ist. Mittels der elastischen Rippe ist es möglich, den Verschlussstopfen an dem zu verschließenden Objekt trotz unterschiedlicher Leitungsinnendurchmesser zu fixieren und trotzdem jeweils eine ausreichende Überdeckung zu gewährleisten.

Vorzugsweise kann sich die elastische Rippe in einer radialen Richtung und in einer Längsrichtung des Innenteils erstrecken. Somit gelangt die Rippe in eine linienförmigen Anlage und kontaktiert von innen das zu verschließende Objekt.

Vorteilhafterweise erstreckt sich die elastische Rippe anfänglich radial und nachfolgend abgewinkelt in radialer Richtung von dem Innenteil aus. Durch die abgewinkelte Ausgestaltung ist die Rippe besonders flexibel und der Verschlussstopfen kann für unterschiedliche Leitungsdurchmesser verwendet werden.

Die elastische Rippe kann in Längsrichtung des Innenteils konisch geformt sein. Dadurch ist die Rippe leicht in unterschiedliche Leitungsinnendurchmesser einsetzbar.

Bevorzugt erstreckt sich die elastische Rippe von einem Bodenabschnitt des Außenteils. Somit ist die Rippe mit dem Bodenabschnitt des Außenteils verbunden, ohne dass die Flexibilität der Rippe beeinträchtigt wird.

Vorteilhafterweise ist die elastische Rippe einstückig mit dem Innenteil ausgebildet und vorzugsweise ist die elastische Rippe nicht mit dem Bodenabschnitt des Außenteils verbunden. Bei solch einer Ausgestaltung ist die elastische Rippe besonders flexibel und der Verschlussstopfen kann auf das Leitungsende geschoben werden, bis der Bodenabschnitt das Leitungsende kontaktiert.

Vorteilhafterweise hat das Innenteil mehrere elastische Rippen, vorzugsweise drei, welche einstückig mit dem Innenteil ausgebildet sind und vorzugsweise mit einem Winkel von 120° zueinander angeordnet sind. Bei drei Rippen kontaktieren diese gleichmäßig die innere Oberfläche eines zu verschließenden Objekts, so dass ein sicherer Sitz des Verschlussstopfens gewährleistet ist.

Es können die elastischen Rippen mit dem Bodenabschnitt des Außenteils verbunden oder entkoppelt sein. Wenn die Rippen mit dem Bodenabschnitt des Außenteils verbunden sind, ist eine besonders kostengünstige Herstellung des Verschlussstopfens möglich. Im Falle eine Entkopplung der Rippen ist die Flexibilität der Rippen besonders hoch, so dass der Verschlussstopfen einfacher in eine Leitung eingeschoben werden kann.

Bevorzugt ist das Innenteil mit den elastischen Rippen konzentrisch zum Außenteil angeordnet. Dadurch kontaktieren die Rippen gleichmäßig die innere Oberfläche der Leitung und das zylindrische Außenteil verklemmt nicht.

Vorteilhafterweise erstreckt sich das Außenteil in einer Längsrichtung des Verschlussstopfens und ist etwas länger als das Innenteil. Dadurch ist eine ausreichende Überdeckung des Leitungsendes durch das Außenteil gewährleistet.

Bevorzugt ist an dem Bodenabschnitt ein Halteteil angeformt, welches sich in einer Längsrichtung entgegengesetzt zu dem Außenteil erstreckt. Mittels des Halteteils kann der Verschlussstopfen leicht an der Leitung montiert bzw. in diese eingesetzt werden.

Der Verschlussstopfen kann aus Kunststoff, insbesondere durch ein Spritzgussverfahren hergestellt sein. Durch dieses Verfahren ist eine besonders schnelle und kostengünstige Fertigung möglich.

Die Erfindung betrifft auch eine Leitung oder einen Schlauch, wobei wenigstens ein Endabschnitt mit einem Verschlussstopfen nach zumindest einem der vorhergehenden Ansprüche verschlossen ist. Somit kann die Leitung sicher transportiert werden, ohne dass Schmutz hinein gelangt oder eine Beschädigung von außen erfolgt.

Die Figuren zeigen:
- Figur 1:: eine perspektivische Ansicht eines Verschlussstopfens gemäß der Erfindung,
- Figur 2:: eine Vorderansicht des erfindungsgemäßen Verschlussstopfens,
- Figur 3:: eine Längsansicht des erfindungsgemäßen Verschlussstopfens:

Im Folgenden wird die Erfindung näher erläutert.

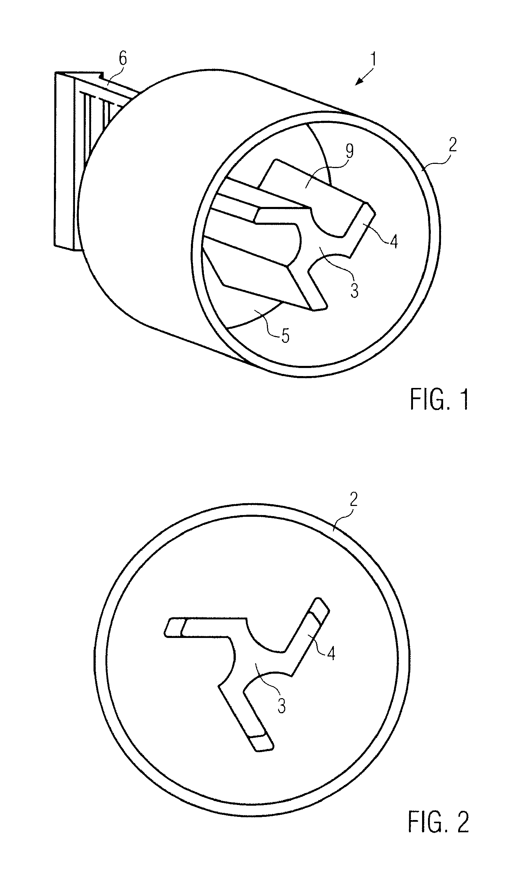

Die Figuren 1 bis 3 zeigen ein Ausführungsbeispiel der Erfindung. Ein zylindrisches Außenteil 2 erstreckt sich in einer Längsrichtung des Verschlussstopfens 1 und beinhaltet einen Bodenabschnitt 5. Von dem Bodenabschnitt 5 aus erstreckt sich ein Halteteil 6 in entgegengesetzter Richtung.

Innerhalb des Außenteils 2 ist konzentrisch ein Innenteil 3 vorgesehen mit mehreren Rippen 4. Die Rippen 4 sind sternförmig ausgehend von dem Innenteil 3 angeordnet und weisen einen Winkel von 120° zueinander auf. Grundsätzlich ist es auch möglich, nur eine Rippe zu verwenden, welche sich von dem Innenteil 3 erstreckt und einstückig mit diesem ausgebildet ist. Weiterhin könnten auch zwei Rippen verwendet werden, welche gegenüber liegen und einen Winkel von 180° einschließen. Ebenso sind vier, fünf oder sechs Rippen denkbar, welche einen gleichmäßigen oder ungleichmäßigen Abstand zueinander aufweisen.

Gemäß der Figur 1 sind drei Rippen vorgesehen, welche entgegengesetzt der Uhrzeigerrichtung abgewinkelt sind. Die Ausrichtungen der Rippen sind insbesondere aus der Figur 2 zu erkennen. Jede Rippe verläuft propelleratig bzw. fächerförmig von innen radial nach außen. Durch die abgewinkelte Form der Rippen können sich diese elastisch verbiegen und an unterschiedliche Innendurchmesser der zu verschließenden Objekte anpassen.

Weiterhin verläuft jede Rippe 4 ausgehend von dem Bodenabschnitt 5 in Längsrichtung konusförmig, das heißt verjüngend zu dem Rand des Außenteils 2. Das heißt, jede Außenkante einer Rippe verläuft schräg in Bezug zu einer zentralen Achse des Verschlussstopfens. Denkbar ist auch eine Phase, d.h. eine Abschrägung, welche jeweils an einer Außenkante jeder Rippe vorgesehen ist, um das Einsetzen der Rippen in ein zu verschließendes Objekt zu erleichtern.

Gemäß der Figur 1 ist ein Ende der Rippe 4 jeweils mit dem Bodenabschnitt 5 verbunden und das andere Ende der Rippe ist frei. Auch denkbar ist, dass beide Enden frei beweglich sind, das heißt, dass ein hinteres Ende 9 der Rippe 4 nicht mit dem Bodenabschnitt 5 verbunden ist und somit auch bei einer Einsteckbewegung frei verformt werden kann. Es kann das hintere Ende 9 von nur einer Rippe 4 frei beweglich sein, und die beiden hinteren Enden 9 der anderen Rippen 4 sind fest oder es können alle Rippen beweglich sein.

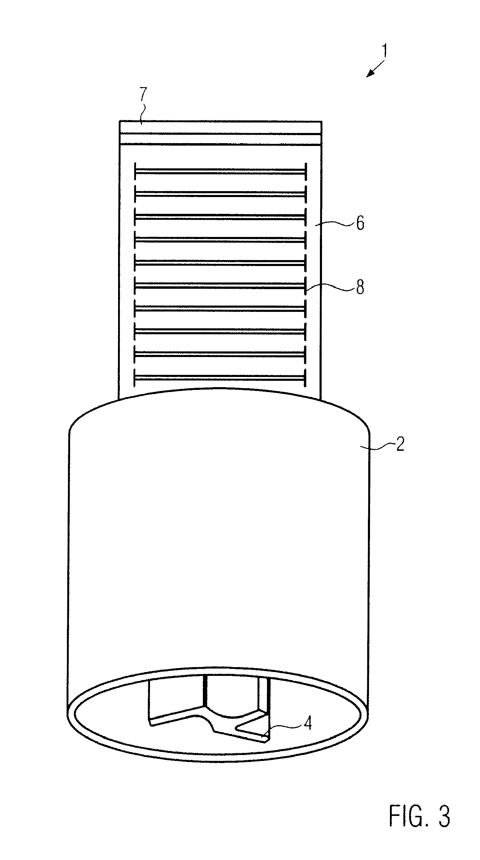

Die Figur 3 zeigt den Verschlussstopfen 1 in Längsrichtung und es ist das Halteteil 6 mit einem Griffabschnitt 7 erkennbar, welcher eine runde Form hat. Weiterhin weist das Halteteil 6 einzelne Vertiefungen 8 auf und diese sind entlang des Halteteils 6 vorgesehen und erhöhen die Griffigkeit und die Handhabbarkeit des Verschlussstopfens.

Das Halteteil 6 kann auch eine andere geeignete Form aufweisen und das Außenteil 2 kann beispielsweise eckig sein, so dass unterschiedliche Ausgestaltungen des Verschlussstopfens denkbar sind.

Zum Einstecken des Verschlussstopfens in ein Leitungsende kann dieser etwas gedreht werden, so dass sich die Rippen 4 verformen, um das Einstecken zu erleichtern. Es ist aber auch eine einfache geradlinige Einsteckbewegung denkbar.

In Folge der rippenförmigen Ausgestaltung des Verschlussstopfens mit der abgewinkelten Rippenform ist es möglich, diesen vollständig auf das Leitungsende zu schieben. Die Erfindung ermöglicht somit, sich einem großen Innendurchmesserbereich unterschiedlicher Leitungen anzupassen und eine feste Klemmung wird möglich. Die sternförmig angeordneten abgewinkelten Rippen 4 legen sich an einen Innenbereich der Leitung an und der Verschlussstopfen ist bei verschiedenen Innendurchmessern einsetzbar, ohne dabei die für den Außenbereich zu überdeckende Strecke zu verändern.

Mittels des Verschlussstopfens können Leitungen bzw. deren Enden verschlossen werden, insbesondere Getriebeölleitungen für ATF-Öle oder auch Getriebeölkühlerleitungen mit beispielsweise 12 mm Durchmesser. Solche zu verschließenden Leitungen besitzen häufig an ihren äußeren Enden einen O-Ring und dieser wird durch das Außenteil 2 gegen Schmutz und Beschädigung geschützt.

Der Verschlussstopfen ist für Anwendungen gedacht, bei denen sowohl der Innenbereich, als auch der Außenbereich z.B. eine Dichtfläche oder einen O-Ringanschluss, wie z.B. SAE-Stecker, gegen Schmutzeintrag und Beschädigungen von außen geschützt werden soll. Die konisch geformten Rippen sind in der Lage, sich beim Einschieben in den Innendurchmesser eines Rohres oder eines Drehteiles, wie z.B. eines O-Ringanschlusses, dem Innendurchmesser anzupassen. Beim Einführen des Verschlussstopfens in die Leitung beginnen die Rippen entlang der inneren Oberfläche der Leitung zu gleiten und je weiter der Verschlussstopfen in die Leitung eingeführt wird, umso stärker legen sich die Rippen an die innere Oberfläche an.

Anders als bei herkömmlichen Verschlussstopfen, die über einen einfachen starren Innenkegel verfügen, beeinflusst der Verschlussstopfen mit den konischen Rippen nur minimal die Einstecktiefe. Dadurch ist selbst bei unterschiedlichen Innendurchmessern im Millimeterbereich eine einheitliche bzw. gleiche Länge der Überdeckung des Verschlussstopfens im Außenbereich der Leitung möglich. Ein weiterer Vorteil dieses Systems liegt darin, dass gegenüber herkömmlichen Verschlussstopfen die direkt auf dem O-Ring sitzen, die Gleitschicht des O-Ringes beim Auf- und Abziehen des Verschlussstopfens nicht entfernt wird und der direkte Kontakt zwischen dem O-Ring und dem Verschlussstopfen verhindert wird. Dadurch können auch keine Weichmacher oder ähnliche aus dem Verschlussstopfen in den O-Ring eindringen. Schädigende Einflüsse der Weichmacher aus dem Verschlussstopfen auf den O-Ring können somit ausgeschlossen werden.

Der Verschlussstopfen besteht aus Kunststoff und kann schnell und kostengünstig durch ein Spritzgussverfahren hergestellt werden.

### Bezugszeichenliste:

- 1: Verschlussstopfen
- 2: Außenteil
- 3: Innenteil
- 4: elastische Rippe
- 5: Bodenabschnitt
- 6: Halteteil
- 7: Griffabschnitt
- 8: Vertiefungen
- 9: hinteres Ende

## Patentansprüche

1. Verschlussstopfen (1), aufweisend:
ein vorzugsweise zylindrisches Außenteil (2), welches ein zu verschließendes Objekt zumindest abschnittsweise umfänglich umgibt, und ein Innenteil (3) welches zumindest eine elastische Rippe (4) aufweist, wobei das Innenteil (3) in das zu verschließendes Objekt einsetzbar ist und dieses von innen kontaktiert.

2. Verschlussstopfen (1) nach Anspruch 1, wobei sich die elastische Rippe (4) in einer radialen Richtung und in einer Längsrichtung des Innenteils (3) erstreckt.

3. Verschlussstopfen (1) nach Anspruch 1 oder 2, wobei sich die elastische Rippe (4) anfänglich radial und nachfolgend abgewinkelt in radialer Richtung von dem Innenteil (3) aus erstreckt.

4. Verschlussstopfen (1) nach zumindest einem der vorhergehenden Ansprüche, wobei die elastische Rippe (4) in Längsrichtung des Innenteils (3) konisch geformt ist.

5. Verschlussstopfen (1) nach zumindest einem der vorhergehenden Ansprüche, wobei sich die elastische Rippe von einem Bodenabschnitt (5) des Außenteils (2) erstreckt.

6. Verschlussstopfen (1) nach zumindest einem der vorhergehenden Ansprüche, wobei die elastische Rippe (4) einstückig mit dem Innenteil (3) ausgebildet ist und vorzugsweise die elastische Rippe (4) nicht mit dem Bodenabschnitt (5) des Außenteils (2) verbunden ist.

7. Verschlussstopfen (1) nach zumindest einem der vorhergehenden Ansprüche, wobei das Innenteil (3) mehrere elastische Rippen (4) aufweist, vorzugsweise drei, welche einstückig mit dem Innenteil (3) ausgebildet sind und vorzugsweise mit einem Winkel von 120° zueinander angeordnet sind.

8. Verschlussstopfen (1) nach zumindest einem der vorhergehenden Ansprüche, wobei die elastischen Rippen (4) mit dem Bodenabschnitt (5) des Außenteils (2) verbunden oder entkoppelt sind.

9. Verschlussstopfen (1) nach zumindest einem der vorhergehenden Ansprüche, wobei das Innenteil (3) mit den elastischen Rippen (4) konzentrisch zum Außenteil (2) angeordnet ist.

10. Verschlussstopfen (1) nach zumindest einem der vorhergehenden Ansprüche, wobei sich das Außenteil (2) in der Längsrichtung des Verschlussstopfens (1) erstreckt und etwas länger ist als das Innenteil (3).

11. Verschlussstopfen (1) nach zumindest einem der vorhergehenden Ansprüche, wobei an den Bodenabschnitt (5) ein Halteteil (6) angeformt ist, welches sich in einer Längsrichtung entgegengesetzt zu dem Außenteil (2) erstreckt.

12. Verschlussstopfen (1) nach zumindest einem der vorhergehenden Ansprüche, wobei dieser aus Kunststoff, insbesondere durch ein Spritzgussverfahren, hergestellt ist.

13. Leitung oder Schlauch, wobei wenigstens ein Endabschnitt mit einem Verschlussstopfen (1) nach zumindest einem der vorhergehenden Ansprüche verschlossen ist.
